(19) Europäisches Patentamt
European Patent Office
Office européen des brevets

(11) **EP 3 467 569 A2**

(12) **EUROPEAN PATENT APPLICATION**

(43) Date of publication:
**10.04.2019 Bulletin 2019/15**

(51) Int Cl.:
***G02B 27/00*** (2006.01)          ***G02B 15/173*** (2006.01)

(21) Application number: **18197666.3**

(22) Date of filing: **28.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2017   JP 2017196154**

(71) Applicant: **CANON KABUSHIKI KAISHA**
**Ohta-ku**
**Tokyo 146-8501 (JP)**

(72) Inventor: **YOSHIMI, Takahiro**
**Tokyo, 146-8501 (JP)**

(74) Representative: **WESER & Kollegen**
**Radeckestraße 43**
**81245 München (DE)**

(54) **ZOOM LENS AND IMAGE PICKUP APPARATUS**

(57)      A zoom lens includes, in order from the object side, a first positive lens unit that remains unmoved for zooming, a second negative lens unit that is moved for zooming, one or two zooming lens units that is moved for zooming, and a positive rear lens unit that remains unmoved for zooming. The intervals between adjacent lens units are changed during zooming. The rear lens unit is composed of a front sub lens unit within a range satisfying 0<d4a/d4<0.3, where d4 is the thickness of the rear lens unit, and d4a is the distance from the vertex of a lens closest to the object side in the rear lens unit, and a rear sub lens unit outside the range. The average Abbe numbers of convex and concave lenses in the front sub lens unit and the average partial dispersion ratio of the convex lenses are appropriately set.

FIG. 1

**Description**

BACKGROUND OF THE INVENTION

Field of the Invention

The present invention relates to a zoom lens and an image pickup apparatus.

Description of the Related Art

Zoom lenses having a wide angle of view, a high zoom ratio, and high optical performance have been demanded for image pickup apparatuses such as television cameras for broadcasting, cameras for filming, video cameras, digital still cameras, and silver halide film camera.
Japanese Patent Application Laid-Open No. 2010-217735, for example, discloses a zoom lens that has good optical performance by defining the Abbe number of a rear sub lens unit in a relay lens unit so as to correct, in particularly, the chromatic aberration of magnification.
However, due to the need for higher definition images in recent years, the number of pixels and the size of an image pickup element have been increasing even further. Thus, there has been a demand for a wide angle of view and a high zoom ratio and, at the same time, further improvement in performance, in particular, further reduction in the amounts of chromatic aberration of magnification and axial chromatic aberration across the entire zoom range.

SUMMARY OF THE INVENTION

The disclosure provides, for example, a zoom lens advantageous in a wide angle of view, a high zoom ratio, and high optical performance thereof.
A zoom lens according to the present invention is a zoom lens including, in order from an object side to an image side: a first lens unit having a positive refractive power and configured not to be moved for zooming; a second lens unit having a negative refractive power and configured to be moved for zooming; one or two zooming lens units configured to be moved for zooming; and a rear lens unit having a positive refractive power and configured not to be moved for zooming, wherein
an interval between each pair of adjacent lens units is changed for zooming,
the rear lens unit includes

a front sub lens unit consisting of a lens whose image-side surface is disposed within a range satisfying a conditional expression

$$0 < d4a/d4 < 0.3,$$

where d4 is a thickness of the rear lens unit, and d4a is a distance from a vertex, of vertices of lenses included in the rear lens unit, closest to the object side, and
a rear sub lens unit other than the front sub lens unit, and conditional expressions

$$30 < \nu pa < 55,$$

$$37 < \nu na < 60,$$

$$-15 < (\nu pa - \nu na) < 5,$$

and

$$0.550 < \theta pa < 0.620,$$

are satisfied where vpa is an average Abbe number of convex lenses included in the front sub lens unit, θpa is an average partial dispersion ratio of the convex lenses, and vna is an average Abbe number of concave lenses included in the front sub lens unit.

An Abbe number ν and a partial dispersion ratio θ are respectively represented by expressions

$$\nu = (Nd - 1)/(NF - NC),$$

and

$$\theta = (Ng - NF)/(NF - NC),$$

where Ng, NF, Nd, and NC are refractive indexes with Fraunhofer g-line, F-line, d-line, and C-line, respectively.

Further features of the present invention will become apparent from the following description of exemplary embodiments with reference to the attached drawings.

BRIEF DESCRIPTION OF THE DRAWINGS

FIG. 1 is a lens cross-sectional view of a zoom lens in numerical embodiment 1 when the zoom lens is focused on an object at infinity at the wide angle end.

FIG. 2A is a set of longitudinal aberration diagrams of the zoom lens in numerical embodiment 1 at the wide angle end when the zoom lens is at infinity focus.

FIG. 2B is a set of longitudinal aberration diagrams of the zoom lens in numerical embodiment 1 at the telephoto end when the zoom lens is at infinity focus.

FIG. 3 is a lens cross-sectional view of a zoom lens in numerical embodiment 2 when the zoom lens is focused on an object at infinity at the wide angle end.

FIG. 4A is a set of longitudinal aberration diagrams of the zoom lens in numerical embodiment 2 at the wide angle end when the zoom lens is at infinity focus.

FIG. 4B is a set of longitudinal aberration diagrams of the zoom lens in numerical embodiment 2 at the telephoto end when the zoom lens is at infinity focus.

FIG. 5 is a lens cross-sectional view of a zoom lens in numerical embodiment 3 when the zoom lens is focused on an object at infinity at the wide angle end.

FIG. 6A is a set of longitudinal aberration diagrams of the zoom lens in numerical embodiment 3 at the wide angle end when the zoom lens is at infinity focus.

FIG. 6B is a set of longitudinal aberration diagrams of the zoom lens in numerical embodiment 3 at the telephoto end when the zoom lens is at infinity focus.

FIG. 7 is a lens cross-sectional view of a zoom lens in numerical embodiment 4 when the zoom lens is focused on an object at infinity at the wide angle end.

FIG. 8A is a set of longitudinal aberration diagrams of the zoom lens in numerical embodiment 4 at the wide angle end when the zoom lens is at infinity focus.

FIG. 8B is a set of longitudinal aberration diagrams of the zoom lens in numerical embodiment 4 at the telephoto end when the zoom lens is at infinity focus.

FIG. 9 is a conceptual diagram of the second-order spectrum of chromatic aberration of magnification.

FIG. 10 is a schematic diagram of main parts of an image pickup apparatus according to the present invention.

DESCRIPTION OF THE EMBODIMENTS

Features of a zoom lens according to the present invention will be described. The zoom lens according to the present invention includes, in order from the object side to the image side, a first lens unit having a positive refractive power and configured not to be moved for zooming, a second lens unit having a negative refractive power and configured to be moved for zooming, one or two zooming lens units configured to be moved for zooming, and a rear lens unit having a positive refractive power and configured not to be moved for zooming.

Here, the height of an axial ray through the i-th lens from its optical axis in paraxial ray tracing is denoted as h_i, and the height of an off-axial principal ray through the i-th lens from its optical axis in the paraxial ray tracing is denoted as h_bar_i. Also, the refractive power of the i-th lens in the paraxial ray tracing is denoted as $\varphi$_i, and the Abbe number of the i-th lens in the paraxial ray tracing is denoted as v_i.

Given the above, a coefficient L of the axial chromatic aberration of a lens system and a coefficient T of the chromatic aberration of magnification of the lens system can be expressed as below.

$$L = \Sigma \ (h\_i \times h\_i \times \varphi\_i \, / \, v\_i) \quad \dots \text{(A)}$$

$$T = \Sigma \ (h\_i \times h\_bar\_i \times \varphi\_i \, / \, v\_i) \qquad \dots \text{(B)}$$

From equations (A) and (B), it can be understood that the axial chromatic aberration is proportional to the square of the height h_i, and the chromatic aberration of magnification is proportional to the height h_i and the height h_bar_i.

Thus, in the present invention, the rear lens unit, which is disposed closest to the image side, has a positive refractive power, and is configured not to be moved for zooming, includes a lens unit A (front sub lens unit) being a lens unit which is near the aperture stop and is assigned with correction of the chromatic aberration of magnification to a small extent, and a lens unit B (rear sub lens unit) being a lens unit which is far from the aperture stop and is assigned with the correction of the chromatic aberration of magnification to a great extent.

Specifically, a lens unit present within a range satisfying a condition of

$$0 < d4a/d4 < 0.3 \qquad \dots \text{(1)}$$

is defined as the lens unit A, where d4 is the thickness of the lens unit closest to the image side, which is configured to remain fixed during zooming, and d4a is the distance from the vertex of a lens included in the positive lens unit closest to the image side, which is configured to remain fixed during zooming, and is closest to the object side. A lens unit present outside that range is defined as the lens unit B.

Further, the lens unit A is characterized by satisfying the conditional expressions below, where vpa and θpa are the average Abbe number and average partial dispersion ratio of the convex lenses included in the lens unit A, respectively, and vna is the average Abbe number of the concave lenses included in the lens unit A.

$$30 < vpa < 55 \qquad \dots \text{(2)}$$

$$37 < vna < 60 \qquad \dots \text{(3)}$$

$$-15 < (vpa - vna) < 5 \qquad \dots \text{(4)}$$

$$0.550 < \theta pa < 0.620 \qquad \dots \text{(5)}$$

Further, the lens unit B is characterized by satisfying the conditional expressions below, where vpb and θpb are the average Abbe number and average partial dispersion ratio of the convex lenses included in the lens unit B, respectively, and vnb is the average Abbe number of the concave lenses included in the lens unit B.

$$70 < vpb < 90 \qquad \dots \text{(6)}$$

$$25 < vnb < 43 \qquad \dots \text{(7)}$$

$$35 < (vpb - vnb) < 55 \qquad \dots \text{(8)}$$

$$0.550 < \theta pb < 0.620 \qquad \dots (9)$$

Note that an Abbe number ν and a partial dispersion ratio θ are expressed as below, respectively, where Ng, NF, Nd, and NC are the refractive indexes with the Fraunhofer g-line (435.8 nm), F-line (486.1 nm), d-line (587.6 nm), and C-line (656.3 nm), respectively.

$$\nu = (Nd - 1)/(NF - NC) \qquad \dots (10)$$

$$\theta = (Ng - NF)/(NF - NC) \qquad \dots (11)$$

Now, the correction of the chromatic aberrations in the zoom lens according to the present invention will be described.

In order for a zoom lens to achieve high optical performance, it is important to correct the chromatic aberration of magnification and the axial chromatic aberration well. In particular, when one attempts to achieve good correction of both the chromatic aberration of magnification and the axial chromatic aberration at the wide angle end, failing to choose appropriate materials can increase the number of lenses.

In this section, the axial chromatic aberration and the chromatic aberration of magnification of the F-line with respect to the C-line are defined as the first-order spectrum of the axial chromatic aberration and the first-order spectrum of the chromatic aberration of magnification, respectively. Further, the axial chromatic aberration and the chromatic aberration of magnification of the g-line with respect to the F-line remaining after correction of the first-order spectra to zero are defined as the second-order spectrum of the axial chromatic aberration and the second-order spectrum of the chromatic aberration of magnification, respectively.

An amount Δf of the axial chromatic aberration and an amount ΔY of the chromatic aberration of magnification of the entire lens system are given by equations (C) and (D) below.

$$\Delta f = -f \times L \qquad \dots (C)$$

$$\Delta Y = -Y \times T \qquad \dots (D)$$

Here, f is the focal length of the entire lens system, and Y is the image height.

Now, consider that partial dispersion of the Abbe number ν_i, used in equations (A) and (B), is Ng - NF. Specifically, equations (A) and (B) represent chromatic aberration coefficients for the second-order spectra of the axial chromatic aberration and the chromatic aberration of magnification, respectively, and equations (C) and (D) represent the amounts of the second-order spectra of the axial chromatic aberration and the chromatic aberration of magnification, respectively.

From equations (A) and (C), the value in the second-order spectrum of the axial chromatic aberration which each lens is assigned with increases in proportion to the square of the height of the axial ray, the power of the lens, and the difference between the refractive index with the g-line and the refractive index with the F-line. From equations (B) and (D), the value in the second-order spectrum of the chromatic aberration of magnification which each lens is assigned with increases in proportion to the height of the axial ray, the height of the off-axial ray, the power of the lens, and the difference between the refractive index with the g-line and the refractive index with the F-line.

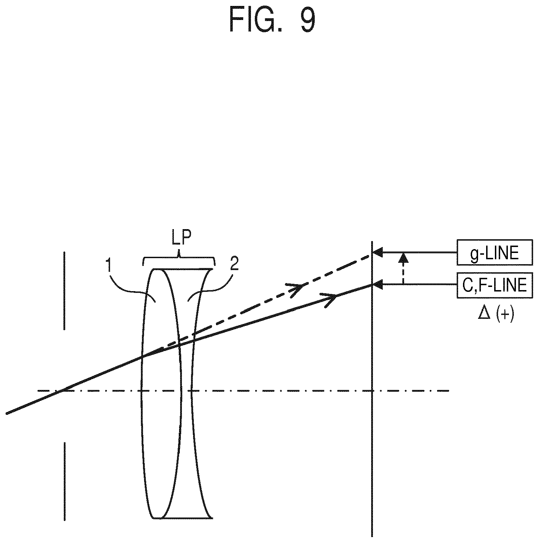

With a conventional zoom lens, as illustrated in FIG. 9, when the first-order spectrum of the chromatic aberration of magnification is made zero at the wide angle end, the second-order spectrum of the chromatic aberration of magnification is likely to remain positively.

To correct this, in the lens unit B, which is assigned with the correction of the chromatic aberration of magnification to a great extent, lenses made of materials having large absolute values of difference between the refractive index with the g-line and the refractive index with the F-line may just be formed to have an appropriate power and arranged. In this way, it is possible to correct the second-order spectrum of the chromatic aberration of magnification at the wide angle end.

Also, by forming the lens unit A, which is near the aperture stop, from appropriate glass materials so as to impart an appropriate power, it is possible to achieve both good correction of the second-order spectrum of the axial chromatic aberration over the entire zoom range, and good correction of the second-order spectrum of the chromatic aberration of magnification at the wide angle end.

Conditional expression (1) defines the lens unit A. If d4a/d4 is smaller than the lower limit value, the lenses included in the lens unit A cannot have a sufficient thickness, and the number of lenses included in the lens unit A is accordingly small. This makes it difficult to achieve good aberration correction, which is not desirable. If d4a/d4 is larger than the upper limit value and the lens unit A is therefore thick, the entire lens system is accordingly large in size.

Conditional expressions (2) to (5) define the Abbe number and partial dispersion ratio of the glass materials of the lenses included in the lens unit A, which is near the aperture stop.

For the correction of the second-order spectrum of the chromatic aberration of magnification, it is desirable to arrange, in the lens unit B, which is assigned with the correction to a great extent, lenses made of materials having large absolute values of difference between the refractive index with the g-line and the refractive index with the F-line. However, this makes it likely to excessively correct the first-order spectrum of the axial chromatic aberration. In order to prevent this and also to achieve good correction of the second-order spectra of the axial chromatic aberration and the chromatic aberration of magnification, it is desirable that the glass materials of the lenses included in the lens unit A satisfy conditional expressions (2) to (5) at the same time.

If vpa is smaller than the lower limit value of conditional expression (2), the first-order spectrum of the axial chromatic aberration is corrected deficiently, which is not desirable. If vpa is larger than the upper limit value, the first-order spectrum of the axial chromatic aberration is corrected excessively, which is not desirable.

If vna is smaller than the lower limit value of conditional expression (3), the first-order spectrum of the axial chromatic aberration is corrected excessively, which is not desirable. If vna is larger than the upper limit value, the first-order spectrum of the axial chromatic aberration is corrected deficiently, which is not desirable.

If (vpa - vna) is smaller than the lower limit value of conditional expression (4), the first-order spectrum of the axial chromatic aberration is corrected deficiently, which is not desirable. If (vpa - vna) is larger than the upper limit value, the first-order spectrum of the axial chromatic aberration is corrected excessively, which is not desirable.

If θpa is smaller than the lower limit value of conditional expression (5), the second-order spectrum of the axial chromatic aberration is corrected deficiently, which is not desirable. If θpa is larger than the upper limit value, the second-order spectrum of the axial chromatic aberration is corrected excessively, which is not desirable.

Further, it is preferable for conditional expressions (1) to (5) to be as below.

$$0 < d4a/d4 < 0.25 \qquad \dots (1a)$$

$$32 < vpa < 50 \qquad \dots (2a)$$

$$40 < vna < 55 \qquad \dots (3a)$$

$$-13 < (vpa - vna) < 0 \qquad \dots (4a)$$

$$0.555 < \theta pa < 0.600 \qquad \dots (5a)$$

Conditional expressions (6) to (9) define the Abbe number and partial dispersion ratio of the glass materials of the lenses included in the lens unit B, which is far from the aperture stop. By arranging, in the lens unit B, lenses satisfying conditional expressions (6) to (9) and made of materials having large absolute values of difference between the refractive index with the g-line and the refractive index with the F-line, it is possible to achieve correction of the second-order spectrum of the chromatic aberration of magnification and good correction of the first- and second-order spectra of the axial chromatic aberration.

If vpb is smaller than the lower limit value of conditional expression (6), the first-order spectrum of the axial chromatic aberration is corrected deficiently, which is not desirable. If vpb is larger than the upper limit value, the first-order spectrum of the axial chromatic aberration is corrected excessively, which is not desirable.

If vnb is smaller than the lower limit value of conditional expression (7), the first-order spectrum of the axial chromatic aberration is corrected excessively, which is not desirable. If vnb is larger than the upper limit value, the first-order spectrum of the axial chromatic aberration is corrected deficiently, which is not desirable.

If (vpb - vnb) is smaller than the lower limit value of conditional expression (8), the first-order spectrum of the axial chromatic aberration is corrected deficiently, which is not desirable. If (vpb - vnb) is larger than the upper limit value, the first-order spectrum of the axial chromatic aberration is corrected excessively, which is not desirable.

If θpb is smaller than the lower limit value of conditional expression (9), the second-order spectra of the chromatic aberration of magnification and the axial chromatic aberration are corrected deficiently, which is not desirable. If θpb is larger than the upper limit value, the second-order spectra of the chromatic aberration of magnification and the axial chromatic aberration are corrected excessively, which is not desirable.

Further, it is preferable for conditional expressions (6) to (9) to be as below.

$$72 < \nu pb < 82 \qquad \ldots (6a)$$

$$28 < \nu nb < 41 \qquad \ldots (7a)$$

$$37 < (\nu pb - \nu nb) < 52 \qquad \ldots (8a)$$

$$0.555 < \theta pb < 0.600 \qquad \ldots (9a)$$

Further, the zoom length is characterized by satisfying the conditional expressions below, where fw is the focal length of the entire system at the wide angle end, f4 and h are the focal length and rear principal point position of the positive lens unit closest to the image side, which remains fixed during zooming, f4a is the focal length of the lens unit A, and f4b is the focal length of the lens unit B.

$$0.7 < f4a/f4 < 1.2 \qquad \ldots (12)$$

$$0.7 < f4b/f4 < 1.4 \qquad \ldots (13)$$

$$-10 < h/fw < -3 \qquad \ldots (14)$$

Conditional expressions (12) to (14) define the relations in power between the rear lens unit, which is closest to the image side, has a positive refractive power, and is configured not to be moved for zooming, and the lens units A and B, and the rear principal point position of the rear lens unit, which is closest to the image side, has a positive refractive power, and is configured not to be moved for zooming.

To ensure both a wide angle of view and a long back focus, a configuration is necessary in which the rear principal point position of the positive lens unit closest to the image side, which remains fixed during zooming, is positioned toward the image plane.

If f4a/f4 is smaller than the lower limit value of conditional expression (12) and the power of the lens unit A therefore is strong, the rear principal point position of the rear lens unit, which is closest to the image side, has a positive refractive power, and is configured not to be moved for zooming, cannot be positioned toward the image plane. This makes it impossible to ensure a sufficient back focus. If f4a/f4 is larger than the upper limit value and the power of the lens unit A therefore is weak, the lens unit B has to be used for the operation to converge light onto the image formation plane. This makes it difficult to correct various aberrations, or increases the number of lenses necessary for correcting the various aberrations and makes the entire lens system large in size accordingly.

If f4b/f4 is smaller than the lower limit value of conditional expression (13) and the power of the lens unit B therefore is strong, it is difficult to correct various aberrations, or the number of lenses necessary for correcting the various aberrations increases and the entire lens system becomes large in size accordingly. If f4b/f4 is larger than the upper limit value and the power of the lens unit B therefore is weak, the rear principal point position of the rear lens unit, which is closest to the image side, has a positive refractive power, and is configured not to be moved for zooming, cannot be positioned toward the image plane. This makes it impossible to ensure a sufficient back focus.

If h/fw is smaller than the lower limit value of conditional expression (14), it is difficult to achieve both a wide angle of view and a long back focus. If h/fw is larger than the upper limit value, the power of the lens unit A is too weak and the power of the lens unit B is too strong. This makes it difficult to correct various aberrations, or increases the number of lenses necessary for correcting the various aberrations and makes the entire lens system large in size accordingly.

Further, it is preferable for conditional expressions (12) to (14) to be as below.

$$0.76 < f4a/f4 < 1.1 \quad \dots (12a)$$

$$0.8 < f4b/f4 < 1.0 \quad \dots (13a)$$

$$-8 < h/fw < -5 \quad \dots (14a)$$

Next, embodiments will be described.

[Embodiment 1]

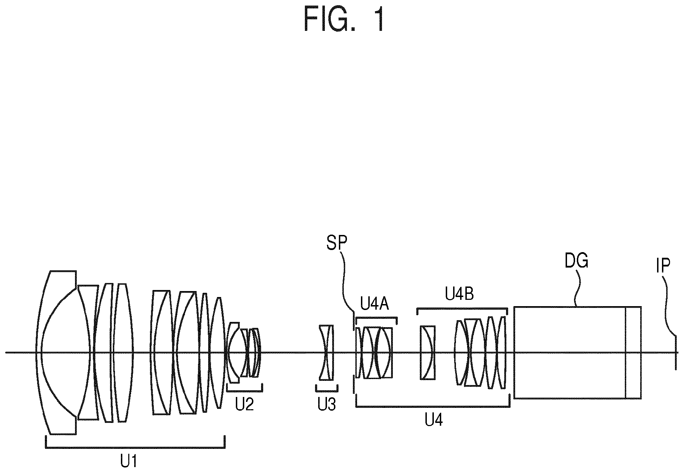

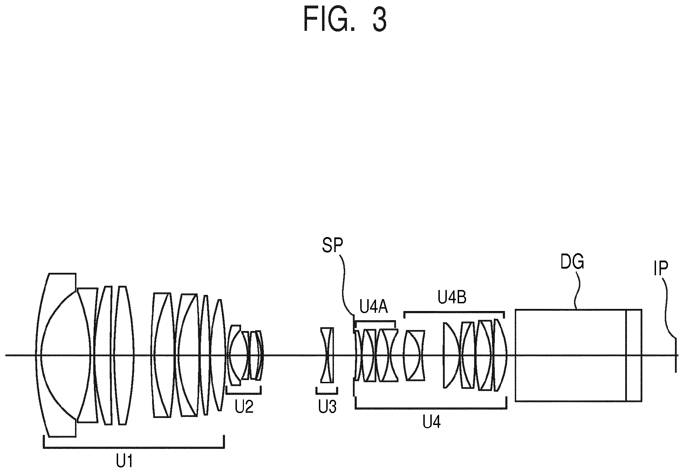

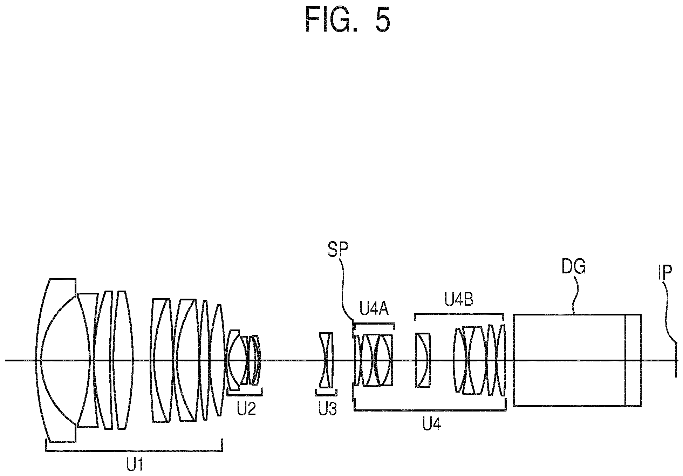

FIG. 1 is a lens cross-sectional view of a zoom lens in numerical embodiment 1 of the present invention when the zoom lens is focused at an object distance of infinity at the wide angle end. The zoom lens includes, in order from the object side to the image side, a first lens unit U1 having a positive refractive power and configured not to be moved for zooming, a second lens unit U2 having a negative refractive power and configured to be moved for zooming, a third lens unit U3 having a negative refractive power and configured to be moved for zooming, and a fourth lens unit U4 (rear lens unit) configured not to be moved for zooming. Further, the fourth lens unit U4 includes a first sub lens unit U4A and a second sub lens unit U4B. For zooming, the zoom lens changes the gap between each pair of neighboring lens units.
The first lens unit U1 has a positive refractive power and is configured not to be moved for zooming. The entire first lens unit U1 or some lens units thereof move for focusing.
The second lens unit U2 is a lens unit (variator lens unit) having a negative refractive power and configured to be moved during zooming. This second lens unit U2 is moved on the optical axis toward the image plane to perform zooming from the wide angle end to the telephoto end. Note that the wide angle end and the telephoto end refer to such zoom positions that the second lens unit U2 for zooming is positioned at the opposite ends of the range on the optical axis within which the second lens unit U2 is mechanically movable.
The third lens unit U3 is a lens unit (compensator lens unit) having a negative refractive power and configured to be moved during zooming. This third lens unit U3 moves on the optical axis in conjunction with movement of the second lens unit to correct the image plane variation resulting from the zooming.
The fourth lens unit U4 has a positive refractive power for image formation and is configured not to be moved for zooming.
Reference sign SP denotes an aperture stop, which is disposed between the third lens unit U3 and the fourth lens unit U4. The position at which the aperture stop is disposed is not limited to this position; the advantageous effects of the present invention can be obtained regardless of where the aperture stop is disposed. This also applies to the subsequent embodiments. Reference sign DG denotes a glass block corresponding to an optical filter or a color separating prism. Reference sign IP denotes an image plane, which corresponds to the image pickup surface of an image pickup element (photoelectric conversion element).
The same lens configuration as the above-described lens configuration is employed in embodiments 2 and 3, which will be described with reference to FIGS. 3 and 5 to be mentioned later, respectively.

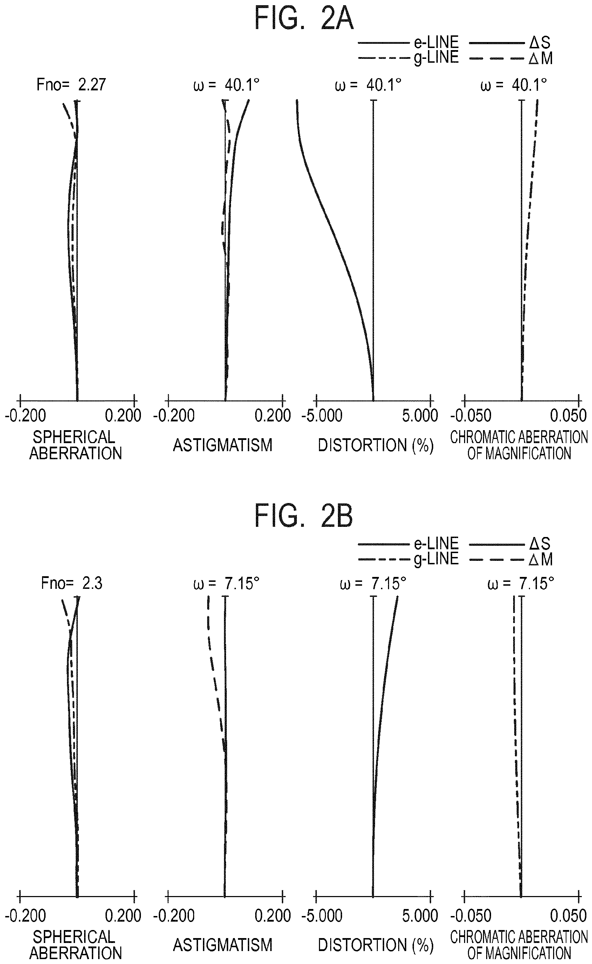

FIGS. 2A and 2B are sets of longitudinal aberration diagrams respectively at the wide angle end and the telephoto end in focus at an object distance of infinity in numerical embodiment 1. Note that the values of the focal length and the object distance are values in the later-described numerical embodiment expressed in units of millimeters.
In all aberration diagrams, the spherical aberration is illustrated with the e-line (solid line) and the g-line (two-dot chain line); the astigmatism is illustrated with the meridional image plane of the e-line (ΔM: dotted line) and the sagittal image plane of the e-line (ΔS: solid line); and the chromatic aberration of magnification is illustrated with the g-line (two-dot chain line). Reference sign Fno denotes the F-number, and reference sign ω denotes the half angle of view. In all aberration diagrams, the spherical aberration, astigmatism, distortion, and chromatic aberration of magnification are illustrated on 0.2-mm, 0.2-mm, 5%, and 0.05-mm scales, respectively.
In embodiment 1, the fourth lens unit U4, or the positive lens unit closest to the image side, which is configured to remain fixed during zooming, includes the first sub lens unit U4A and the second sub lens unit U4B. Further, as described in table 1, the first sub lens unit U4A and the second sub lens unit U4B are configured to satisfy the condition expressions. In this way, good aberration correction is achieved.

[Embodiment 2]

FIG. 3 is a lens cross-sectional view of a zoom lens in numerical embodiment 2 of the present invention when the zoom lens is focused at an object distance of infinity at the wide angle end. The zoom lens includes, in order from the object side, a first lens unit U1 having a positive refractive power and configured not to be moved for zooming, a second lens unit U2 having a negative refractive power and configured to be moved for zooming, a third lens unit U3 having a negative refractive power and configured to be moved for zooming, and a fourth lens unit U4 (rear lens unit) configured not to be moved for zooming. Further, the fourth lens unit U4 includes a first sub lens unit U4A and a second sub lens unit U4B. For zooming, the zoom lens changes the gap between each pair of neighboring lens units.

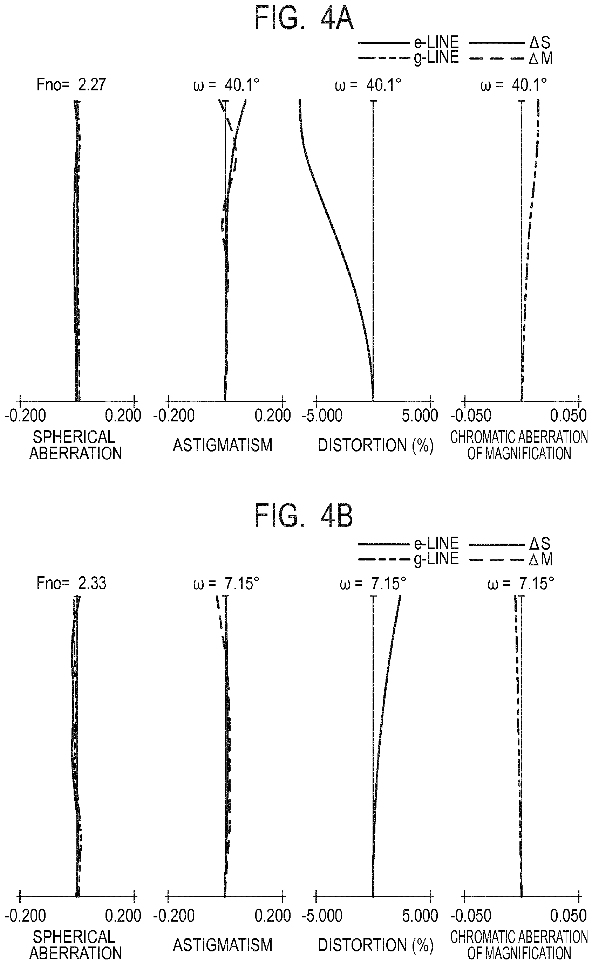

FIGS. 4A and 4B are sets of longitudinal aberration diagrams respectively at the wide angle end and the telephoto end in focus at an object distance of infinity in numerical embodiment 2.
In embodiment 2 too, the fourth lens unit U4, or the positive lens unit closest to the image side, which is configured not to be moved for zooming, includes the first sub lens unit U4A and the second sub lens unit U4B. Further, as described in table 1, the first sub lens unit U4A and the second sub lens unit U4B are configured to satisfy the condition expressions. In this way, good aberration correction is achieved.

[Embodiment 3]

FIG. 5 is a lens cross-sectional view of a zoom lens in numerical embodiment 3 of the present invention when the zoom lens is focused at an object distance of infinity at the wide angle end. The zoom lens includes, in order from the object side to the image side, a first lens unit U1 having a positive refractive power and configured not to be moved for zooming, a second lens unit U2 having a negative refractive power and configured to be moved for zooming, a third lens unit U3 having a negative refractive power and configured to be moved for zooming, and a fourth lens unit U4 (rear lens unit) configured not to be moved for zooming. Further, the fourth lens unit U4 includes a first sub lens unit U4A and a second sub lens unit U4B. For zooming, the zoom lens changes the gap between each pair of neighboring lens units.

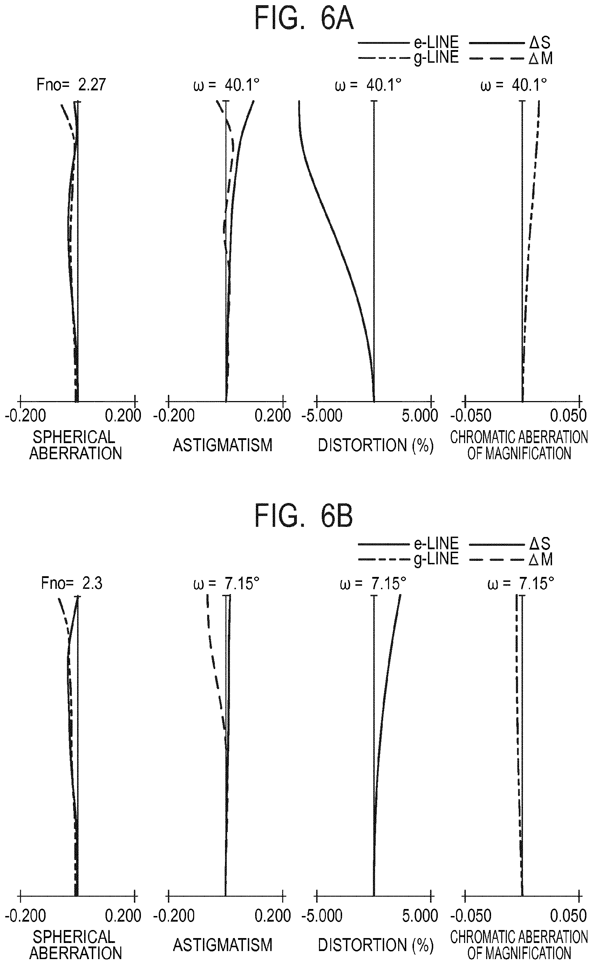

FIGS. 6A and 6B are sets of longitudinal aberration diagrams respectively at the wide angle end and the telephoto end in focus at an object distance of infinity in numerical embodiment 3.
In embodiment 3 too, the fourth lens unit U4, or the positive lens unit closest to the image side, which is configured not to be moved for zooming, includes the first sub lens unit U4A and the second sub lens unit U4B. Further, as described in table 1, the first sub lens unit U4A and the second sub lens unit U4B are configured to satisfy the condition expressions. In this way, good aberration correction is achieved.

[Embodiment 4]

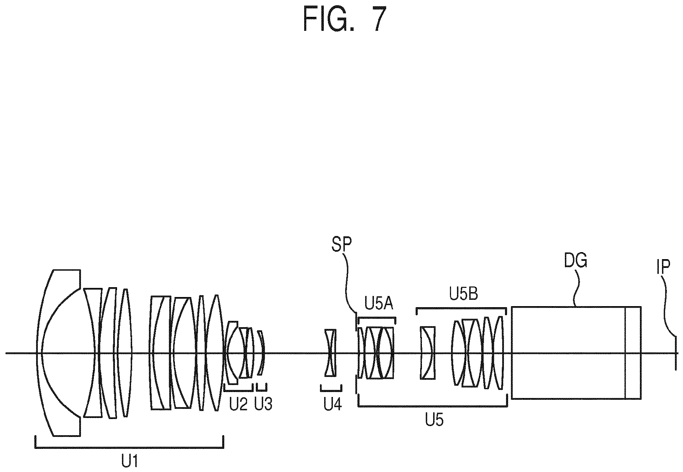

FIG. 7 is a lens cross-sectional view of a zoom lens in numerical embodiment 4 of the present invention when the zoom lens is focused at an object distance of infinity at the wide angle end. The zoom lens includes, in order from the object side to the image side, a first lens unit U1 having a positive refractive power and configured not to be moved for zooming, a second lens unit U2 having a negative refractive power and configured to be moved for zooming, a third lens unit U3 having a negative refractive power and configured to be moved for zooming, a fourth lens unit U4 having a negative refractive power and configured to be moved for zooming, and a fifth lens unit U5 (rear lens unit) configured not to be moved for zooming. Further, the fifth lens unit U5 includes a first sub lens unit U5A and a second sub lens unit U5B. For zooming, the zoom lens changes the gap between each pair of neighboring lens units

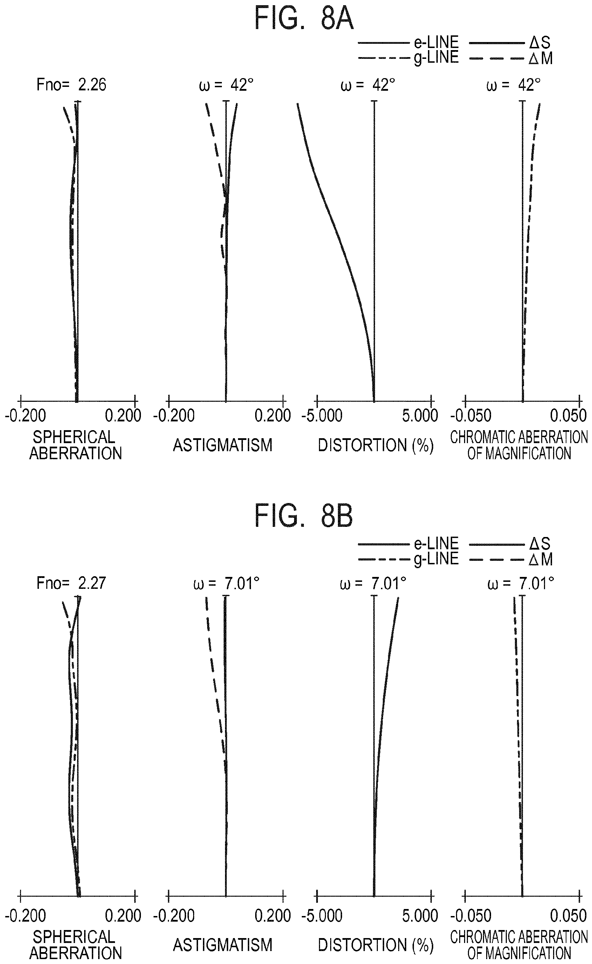

FIGS. 8A and 8B are sets of longitudinal aberration diagrams respectively at the wide angle end and the telephoto end in focus at an object distance of infinity in numerical embodiment 4.
In embodiment 4 too, the fifth lens unit U5, or the positive lens unit closest to the image side, which is configured to remain fixed during zooming, includes the first sub lens unit U5A (front sub lens unit) and the second sub lens unit U5B (rear sub lens unit). Further, as described in table 1, the first sub lens unit U5A and the second sub lens unit U5B are configured to satisfy the condition expressions. In this way, good aberration correction is achieved.

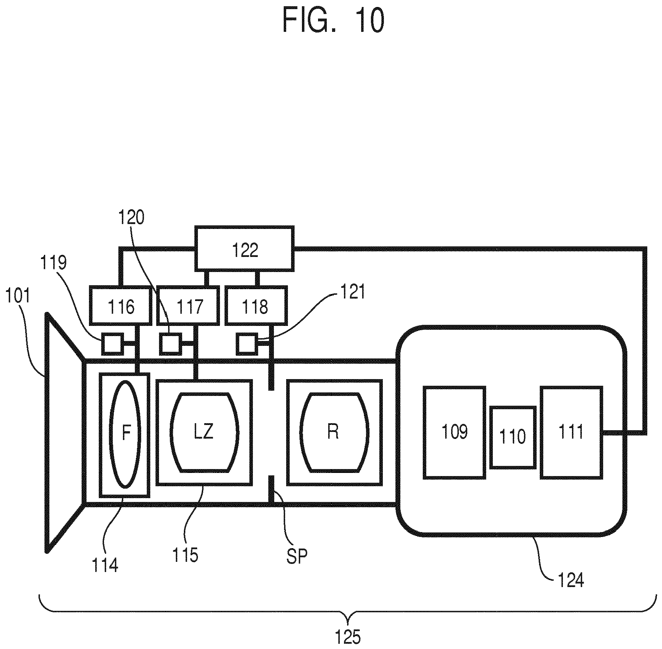

FIG. 10 is a schematic diagram of main parts of an image pickup apparatus 125 (television camera system) using the zoom lens in any one of the embodiments as an image pickup optical system. In FIG. 10, reference sign 101 denotes the zoom lens in any one of embodiments 1 to 3. Reference sign 124 denotes a camera body, and the zoom lens 101 is detachably mountable to the camera body 124. Reference sign 125 denotes an image pickup apparatus (image pickup system) configured by mounting the zoom lens 101 to the camera body 124.
Here, the zoom lens 101 and the camera body 124 may be configured integrally with each other. The zoom lens 101 has a first lens unit F, a zooming part LZ, a fourth lens unit R for image formation. The first lens unit F includes lens units for focusing. The zooming part LZ includes a second lens unit configured to be moved on the optical axis for zooming and a third lens unit configured to be moved on the optical axis for correcting the image plane variation resulting from the zooming. Reference sign SP denotes an aperture stop.

Reference signs 114 and 115 denote drive mechanisms, such as helicoids and cams, configured to drive the first lens unit F and the zooming part LZ in the direction of the optical axis, respectively. Reference signs 116 to 118 denote motors (drive means) configured to electrically drive the drive mechanisms 114 and 115 and the aperture stop SP, respectively. Reference signs 119 to 121 denote detectors, such as encoders, potentiometers, or photosensors, configured to detect the positions of the first lens unit F and the zooming part LZ on the optical axis and the aperture diameter of the aperture stop SP, respectively.

As for the camera body 124, reference sign 109 denotes a glass block corresponding to an optical filter or a color separating prism inside the camera body 124, and reference sign 110 denotes a solid-state image pickup element (photoelectric conversion element), such as a CCD sensor or a CMOS sensor, configured to receive an optical image of an object formed by the zoom lens 101. Also, reference signs 111 and 122 denote CPUs configured to control the drive of the various parts of the camera body 124 and the zoom lens body 101.

By applying the zoom lens according to the present invention to a television camera in this manner, an image pickup apparatus having high optical performance is obtained.

Numerical embodiments 1 to 4 corresponding respectively to embodiments 1 to 4 of the present invention are presented below. In each numerical embodiment, reference sign i denotes the sequential position of a surface from the object side, reference sign ri denotes the curvature radius of the i-th surface, reference sign di denotes the gap between the i-th surface and the i+1-th surface, and reference signs Ni and vi respectively denote the refractive index and Abbe number of the material between the i-th surface and the i+1-th surface. The shape of each aspheric surface is expressed by the equation below, where an X axis is in the direction of the optical axis, an H axis is in a direction perpendicular to the optical axis, the direction in which light travels is a positive direction, R is the paraxial curvature radius, k is the conic constant, and A4, A5, A6, A7, A8, A9, A10, A11, A12, A13, A14, A15, and A16 are aspherical coefficients.

$$X = \frac{H^2/R}{1+\sqrt{1-(1+k)(H/R)^2}} + A4H^4 + A5H^5 + A6H^6 + A7H^7 + A8H^8 + A9H^9$$
$$+ A10H^{10} + A11H^{11} + A12H^{12} + A13H^{13} + A14H^{14} + A15H^{15} + A16H^{16}$$

Also, "e-Z", for example, means "$\times 10^{-Z}$". An asterisk attached to a surface number indicates that that surface is an aspherical surface.

[Numerical embodiment 1]

[Unit mm]

Surface data

| Surface number | r | d | nd | vd | θgF | Effective diameter |
|---|---|---|---|---|---|---|
| 1* | 149.548 | 2.80 | 1.80100 | 34.97 | 0.586 | 88.3 |
| 2 | 42.647 | 27.59 | | | | 70.5 |
| 3 | -98.092 | 2.20 | 1.64000 | 60.08 | 0.537 | 69.8 |
| 4 | 292.025 | 0.20 | | | | 73.5 |
| 5 | 117.722 | 9.12 | 1.95906 | 17.47 | 0.660 | 75.7 |
| 6 | 625.243 | 1.84 | | | | 75.8 |
| 7* | 200.826 | 10.94 | 1.60311 | 60.64 | 0.542 | 75.1 |
| 8 | -177.095 | 10.00 | | | | 75.7 |
| 9 | 368.778 | 2.00 | 1.84666 | 23.78 | 0.621 | 66.6 |
| 10 | 83.802 | 10.73 | 1.43875 | 94.66 | 0.534 | 67.0 |
| 11 | -289.312 | 0.20 | | | | 67.7 |
| 12 | 148.911 | 2.00 | 1.80000 | 29.84 | 0.602 | 66.7 |
| 13 | 62.705 | 12.51 | 1.43875 | 94.66 | 0.534 | 65.0 |
| 14 | -294.273 | 0.25 | | | | 65.1 |
| 15 | 241.395 | 5.46 | 1.59522 | 67.74 | 0.544 | 64.9 |

(continued)

| Surface number | r | d | nd | vd | θgF | Effective diameter |
|---|---|---|---|---|---|---|
| 16 | -318.587 | 0.20 | | | | 65.0 |
| 17 | 101.480 | 8.69 | 1.76385 | 48.51 | 0.559 | 60.4 |
| 18 | -183.679 | (variable) | | | | 59.5 |
| 19* | 79.525 | 1.30 | 1.77250 | 49.60 | 0.552 | 32.2 |
| 20 | 20.175 | 10.08 | | | | 26.9 |
| 21 | -27.984 | 0.90 | 1.69680 | 55.53 | 0.543 | 25.1 |
| 22 | -117.338 | 0.12 | | | | 24.5 |
| 23 | 95.120 | 3.92 | 1.85478 | 24.80 | 0.612 | 24.9 |
| 24 | -52.853 | 2.00 | | | | 25.0 |
| 25 | -27.569 | 0.90 | 1.77250 | 49.60 | 0.552 | 24.9 |
| 26 | -57.066 | (variable) | | | | 25.9 |
| 27 | -32.819 | 0.90 | 1.72916 | 54.68 | 0.544 | 26.3 |
| 28 | 68.152 | 3.55 | 1.84666 | 23.78 | 0.619 | 28.7 |
| 29 | -870.558 | (variable) | | | | 29.2 |
| 30 | stop | 1.40 | | | | 25.3 |
| 31 | 2004.580 | 3.09 | 1.64000 | 60.08 | 0.537 | 26.1 |
| 32 | -71.403 | 0.15 | | | | 26.7 |
| 33 | 69.906 | 6.33 | 1.72047 | 34.71 | 0.583 | 27.4 |
| 34 | -31.069 | 1.20 | 1.53775 | 74.7 | 0.539 | 27.4 |
| 35 | 35.657 | 0.89 | | | | 26.5 |
| 36 | 49.237 | 7.52 | 1.72047 | 34.71 | 0.583 | 26.5 |
| 37 | -24.445 | 1.20 | 1.92286 | 18.90 | 0.650 | 26.3 |
| 38 | -1374.016 | 16.22 | | | | 26.6 |
| 39 | -15834.806 | 6.46 | 1.92286 | 18.90 | 0.650 | 27.8 |
| 40 | -23.187 | 1.30 | 2.00330 | 28.27 | 0.598 | 27.9 |
| 41 | 547.294 | 11.43 | | | | 28.5 |
| 42 | 86.635 | 7.72 | 1.43875 | 94.66 | 0.534 | 33.6 |
| 43 | -39.112 | 0.14 | | | | 34.1 |
| 44 | -76.315 | 1.40 | 1.91650 | 31.60 | 0.591 | 33.8 |
| 45 | 51.590 | 8.10 | 1.43875 | 94.66 | 0.534 | 34.8 |
| 46 | -59.686 | 0.20 | | | | 36.0 |
| 47 | 107.826 | 6.14 | 1.43875 | 94.66 | 0.534 | 37.9 |
| 48 | -77.053 | 0.15 | | | | 38.3 |
| 49 | 72.137 | 4.97 | 1.48749 | 70.23 | 0.530 | 38.5 |
| 50 | -457.394 | 5.00 | | | | 38.1 |
| 51 | ∞ | 63.04 | 1.60859 | 46.44 | 0.566 | 50.0 |
| 52 | ∞ | 8.70 | 1.51633 | 64.15 | 0.535 | 50.0 |
| 53 | ∞ | 19.65 | | | | 50.0 |
| Image plane | ∞ | | | | | |

Aspheric surface data

1st surface

K=7.33269e+000

A4=-6.15452e-007

A6=-9.77433e-009

A8=-1.03311e-011

A10=2.74432e-015

A12=3.26164e-019

A5=1.13885e-007

A7=4.44163e-010

A9=5.25416e-014

A11=-5.64765e-017

7th surface

K=-1.11561e+001
A4=-1.55558e-007
A6=4.05608e-009
A8=3.16992e-012
A10=-3.01649e-016
A12=1.52269e-018
A14=1.53867e-021
A16=2.92896e-025
A5=-4.99609e-008
A7=-1.62368e-010
A9=-6.91232e-015
A11=-2.77999e-017
A13=-4.99106e-020
A15=-3.25632e-023

19th surface

K=1.83539e+001
A4=5.27694e-007
A6=-1.89572e-008
A8=2.09674e-009
A10=-9.88135e-012
A12=-1.64945e-014
A5=5.24332e-007
A7=-1.50246e-008
A9=-4.51209e-011
A11=7.54595e-013

Various data

| | | | | | |
|---|---|---|---|---|---|
| Zoom ratio | 6.70 | | | | |
| Focal length | 11.00 | 19.80 | 35.20 | 55.55 | 73.70 |
| F-number | 2.30 | 2.30 | 2.30 | 2.30 | 2.30 |
| Half angle of view (degree) | 40.06 | 25.04 | 14.72 | 9.45 | 7.15 |
| Image height | 9.25 | 9.25 | 9.25 | 9.25 | 9.25 |
| Total lens length | 362.01 | 362.01 | 362.01 | 362.01 | 362.01 |
| BF | 19.65 | 19.65 | 19.65 | 19.65 | 19.65 |
| d18 | 0.89 | 19.43 | 32.73 | 40.42 | 43.93 |
| d26 | 36.72 | 16.75 | 5.05 | 2.40 | 4.01 |

(continued)

| | | | | | |
|---|---|---|---|---|---|
| d29 | 11.60 | 13.03 | 11.43 | 6.39 | 1.28 |
| Entrance pupil position | 52.55 | 68.25 | 89.46 | 111.11 | 125.65 |
| Exit pupil position | 599.61 | 599.61 | 599.61 | 599.61 | 599.61 |
| Front principal point position | 63.76 | 88.72 | 126.80 | 171.98 | 208.71 |
| Rear principal point position | 8.65 | -0.15 | -15.55 | -35.90 | -54.05 |

Zoom lens unit data

| Unit | Start surface | Focal length | Lens structure length | Front principal point position | Rear principal point position |
|---|---|---|---|---|---|
| 1 | 1 | 44.38 | 106.74 | 60.49 | 31.84 |
| 2 | 19 | -26.12 | 19.22 | 3.09 | -12.23 |
| 3 | 27 | -51.39 | 4.45 | -0.17 | -2.61 |
| 4 | 31 | 63.77 | 84.60 | 68.57 | -70.89 |

Individual lens data

| Lens | Start surface | Focal length |
|---|---|---|
| 1 | 1 | -74.86 |
| 2 | 3 | -114.03 |
| 3 | 5 | 147.91 |
| 4 | 7 | 157.14 |
| 5 | 9 | -127.24 |
| 6 | 10 | 149.04 |
| 7 | 12 | -135.74 |
| 8 | 13 | 118.79 |
| 9 | 15 | 230.76 |
| 10 | 17 | 86.30 |
| 11 | 19 | -35.16 |
| 12 | 21 | -52.73 |
| 13 | 23 | 39.86 |
| 14 | 25 | -69.64 |
| 15 | 27 | -30.13 |
| 16 | 28 | 74.05 |
| 17 | 31 | 107.37 |
| 18 | 33 | 30.45 |
| 19 | 34 | -30.58 |
| 20 | 36 | 23.53 |
| 21 | 37 | -26.65 |
| 22 | 39 | 24.85 |
| 23 | 40 | -21.96 |
| 24 | 42 | 62.43 |
| 25 | 44 | -33.16 |
| 26 | 45 | 64.34 |
| 27 | 47 | 103.21 |
| 28 | 49 | 127.78 |
| 29 | 51 | 0.00 |
| 30 | 52 | 0.00 |

[Numerical embodiment 2]

[Unit mm]

Surface data

| Surface number | r | d | nd | vd | θgF | Effective diameter |
|---|---|---|---|---|---|---|
| 1* | 163.437 | 2.80 | 1.80100 | 35.0 | 0.586 | 88.3 |
| 2 | 42.600 | 27.98 | | | | 70.5 |
| 3 | -93.420 | 2.20 | 1.64000 | 60.1 | 0.537 | 69.8 |
| 4 | 353.608 | 0.20 | | | | 73.5 |
| 5 | 125.826 | 9.24 | 1.95906 | 17.5 | 0.660 | 75.7 |
| 6 | 1186.367 | 1.99 | | | | 75.8 |
| 7* | 209.507 | 11.01 | 1.60311 | 60.6 | 0.542 | 75.1 |
| 8 | -168.720 | 10.00 | | | | 75.7 |
| 9 | 321.528 | 2.00 | 1.84666 | 23.8 | 0.621 | 66.6 |
| 10 | 80.689 | 11.31 | 1.43875 | 94.7 | 0.534 | 67.0 |
| 11 | -254.404 | 0.20 | | | | 67.7 |
| 12 | 151.967 | 2.00 | 1.80000 | 29.8 | 0.602 | 66.7 |
| 13 | 62.795 | 12.02 | 1.43875 | 94.7 | 0.534 | 65.0 |
| 14 | -400.391 | 0.25 | | | | 65.1 |
| 15 | 213.130 | 5.58 | 1.59522 | 67.7 | 0.544 | 64.9 |
| 16 | -355.266 | 0.20 | | | | 65.0 |
| 17 | 101.480 | 8.67 | 1.76385 | 48.5 | 0.559 | 60.4 |
| 18 | -185.603 | (variable) | | | | 59.5 |
| 19* | 78.584 | 1.30 | 1.77250 | 49.6 | 0.552 | 32.2 |
| 20 | 20.175 | 10.20 | | | | 26.9 |
| 21 | -27.127 | 0.90 | 1.69680 | 55.5 | 0.543 | 25.1 |
| 22 | -115.608 | 0.12 | | | | 24.5 |
| 23 | 103.355 | 5.10 | 1.85478 | 24.8 | 0.612 | 24.9 |
| 24 | -50.973 | 1.67 | | | | 25.0 |
| 25 | -27.907 | 0.90 | 1.77250 | 49.6 | 0.552 | 24.9 |
| 26 | -57.066 | (variable) | | | | 25.9 |
| 27 | -33.370 | 0.90 | 1.72916 | 54.7 | 0.544 | 26.3 |
| 28 | 70.827 | 3.00 | 1.84666 | 23.8 | 0.619 | 28.7 |
| 29 | -870.558 | (variable) | | | | 29.2 |
| 30 | stop | 1.40 | | | | 25.3 |
| 31 | -165.545 | 3.00 | 1.83400 | 37.2 | 0.578 | 25.8 |
| 32 | -51.203 | 0.15 | | | | 26.4 |
| 33 | 68.758 | 6.62 | 1.72047 | 34.7 | 0.583 | 27.1 |
| 34 | -28.245 | 1.20 | 1.92286 | 18.9 | 0.650 | 27.1 |
| 35 | -1094.871 | 0.20 | | | | 27.4 |
| 36 | 46.079 | 7.11 | 1.72047 | 34.7 | 0.583 | 27.7 |
| 37 | -31.900 | 1.20 | 1.53775 | 74.7 | 0.539 | 27.4 |
| 38 | 22.212 | 7.53 | | | | 24.7 |
| 39 | 52.331 | 9.12 | 1.80810 | 22.8 | 0.631 | 25.7 |
| 40 | -17.266 | 1.30 | 2.00330 | 28.3 | 0.598 | 25.4 |
| 41 | 65.209 | 12.39 | | | | 26.2 |
| 42 | 1180.666 | 9.06 | 1.43875 | 94.7 | 0.534 | 33.9 |
| 43 | -24.933 | 0.20 | | | | 34.9 |
| 44 | 129.226 | 1.40 | 1.88300 | 40.8 | 0.567 | 35.4 |

(continued)

| Surface number | r | d | nd | vd | θgF | Effective diameter |
|---|---|---|---|---|---|---|
| 45 | 36.474 | 7.27 | 1.43875 | 94.7 | 0.534 | 34.9 |
| 46 | -172.208 | 0.20 | | | | 35.3 |
| 47 | 90.980 | 8.66 | 1.43875 | 94.7 | 0.534 | 36.0 |
| 48 | -34.475 | 1.40 | 1.88300 | 40.8 | 0.567 | 36.0 |
| 49 | -156.162 | 0.15 | | | | 37.6 |
| 50 | 298.674 | 7.45 | 1.48749 | 70.2 | 0.530 | 38.3 |
| 51 | -39.538 | 5.00 | | | | 38.6 |
| 52 | ∞ | 63.04 | 1.60859 | 46.4 | 0.566 | 50.0 |
| 53 | ∞ | 8.70 | 1.51633 | 64.2 | 0.535 | 50.0 |
| 54 Image plane | ∞ ∞ | 19.50 | | | | 50.0 |

Aspheric surface data

1st surface

K=1.00231e+001
A4=-2.61109e-007
A6=-1.09707e-009
A8=2.93571e-013
A10=-3.38366e-015
A12=-5.00146e-019
A5=2.96902e-008
A7=-5.22620e-012
A9=5.99830e-014
A11=6.82049e-017

7th surface

K=-1.50982e+001
A4=-3.41448e-007
A6=-1.03531e-009
A8=9.01971e-013
A10=2.87265e-015
A12=2.38372e-019
A14=3.07510e-021
A16=-1.18463e-025
A5=4.20514e-009
A7=5.67785e-011
A9=-1.47770e-013
A11=4.64730e-017
A13=-1.29632e-019
A15=-1.51585e-023

19th surface

K=1.84565e+001

A4=2.18836e-006

A6=3.60808e-007

A8=6.18748e-009

A10=-2.15354e-011

A12=-3.15905e-014

A5=-7.89081e-007

A7=-7.14280e-008

A9=-1.03476e-010

A11=1.52154e-012

Various data

| Zoom ratio | | | 6.70 | | |
|---|---|---|---|---|---|
| Focal length | 11.00 | 19.80 | 35.20 | 55.55 | 73.70 |
| F-number | 2.27 | 2.27 | 2.27 | 2.27 | 2.33 |
| Half angle of view (degree) | 40.06 | 25.04 | 14.72 | 9.45 | 7.15 |
| Image height | 9.25 | 9.25 | 9.25 | 9.25 | 9.25 |
| Total lens length | 363.90 | 363.90 | 363.90 | 363.90 | 363.90 |
| BF | 19.50 | 19.50 | 19.50 | 19.50 | 19.50 |
| d18 | 1.28 | 19.64 | 32.78 | 40.34 | 43.77 |
| d26 | 36.04 | 16.26 | 4.81 | 2.40 | 4.16 |
| d29 | 11.60 | 13.02 | 11.33 | 6.19 | 1.00 |
| Entrance pupil position | 51.95 | 67.39 | 88.30 | 109.62 | 123.81 |
| Exit pupil position | 837.95 | 837.95 | 837.95 | 837.95 | 837.95 |
| Front principal point position | 63.10 | 87.67 | 125.02 | 168.94 | 204.14 |
| Rear principal point position | 8.50 | -0.30 | -15.70 | -36.05 | -54.20 |

Zoom lens unit data

| Unit | Start surface | Focal length | Lens structure length | Front principal point position | Rear principal point position |
|---|---|---|---|---|---|
| 1 | 1 | 43.64 | 107.65 | 59.93 | 32.12 |
| 2 | 19 | -25.96 | 20.19 | 2.99 | -12.89 |
| 3 | 27 | -52.17 | 3.90 | -0.16 | -2.30 |
| 4 | 31 | 61.36 | 85.60 | 64.18 | -65.71 |

Individual lens data

| Lens | Start surface | Focal length |
|---|---|---|
| 1 | 1 | -72.20 |
| 2 | 3 | -114.79 |
| 3 | 5 | 144.21 |
| 4 | 7 | 156.06 |
| 5 | 9 | -126.47 |
| 6 | 10 | 140.72 |
| 7 | 12 | -134.06 |

(continued)

| Lens | Start surface | Focal length |
|---|---|---|
| 8 | 13 | 124.39 |
| 9 | 15 | 223.84 |
| 10 | 17 | 86.61 |
| 11 | 19 | -35.31 |
| 12 | 21 | -50.86 |
| 13 | 23 | 40.18 |
| 14 | 25 | -71.33 |
| 15 | 27 | -30.86 |
| 16 | 28 | 76.71 |
| 17 | 31 | 87.28 |
| 18 | 33 | 28.42 |
| 19 | 34 | -31.05 |
| 20 | 36 | 27.02 |
| 21 | 37 | -24.09 |
| 22 | 39 | 16.90 |
| 23 | 40 | -13.39 |
| 24 | 42 | 55.64 |
| 25 | 44 | -57.63 |
| 26 | 45 | 69.17 |
| 27 | 47 | 58.06 |
| 28 | 48 | -50.08 |
| 29 | 50 | 71.90 |
| 30 | 52 | 0.00 |
| 31 | 53 | 0.00 |

[Numerical embodiment 3]

[Unit mm]

Surface data

| Surface number | r | d | nd | vd | $\theta$gF | Effective diameter |
|---|---|---|---|---|---|---|
| 1* | 150.642 | 2.80 | 1.80100 | 35.0 | 0.586 | 88.3 |
| 2 | 42.822 | 27.49 | | | | 70.5 |
| 3 | -97.613 | 2.20 | 1.64000 | 60.1 | 0.537 | 69.8 |
| 4 | 290.941 | 0.20 | | | | 73.5 |
| 5 | 117.548 | 9.13 | 1.95906 | 17.5 | 0.660 | 75.7 |
| 6 | 623.278 | 1.85 | | | | 75.8 |
| 7* | 208.446 | 10.97 | 1.60311 | 60.6 | 0.542 | 75.1 |
| 8 | -171.570 | 10.00 | | | | 75.7 |
| 9 | 385.950 | 2.00 | 1.84666 | 23.8 | 0.621 | 66.6 |
| 10 | 83.826 | 10.68 | 1.43875 | 94.7 | 0.534 | 67.0 |
| 11 | -297.694 | 0.20 | | | | 67.7 |
| 12 | 142.280 | 2.00 | 1.80000 | 29.8 | 0.602 | 66.7 |
| 13 | 62.663 | 12.65 | 1.43875 | 94.7 | 0.534 | 65.0 |
| 14 | -274.177 | 0.25 | | | | 65.1 |
| 15 | 234.827 | 5.39 | 1.59522 | 67.7 | 0.544 | 64.9 |
| 16 | -345.241 | 0.20 | | | | 65.0 |

17

(continued)

| Surface number | r | d | nd | vd | θgF | Effective diameter |
|---|---|---|---|---|---|---|
| 17 | 101.486 | 8.62 | 1.76385 | 48.5 | 0.559 | 60.4 |
| 18 | -189.155 | (variable) | | | | 59.5 |
| 19* | 81.276 | 1.30 | 1.77250 | 49.6 | 0.552 | 32.2 |
| 20 | 20.175 | 10.13 | | | | 26.9 |
| 21 | -27.598 | 0.90 | 1.69680 | 55.5 | 0.543 | 25.1 |
| 22 | -107.710 | 0.12 | | | | 24.5 |
| 23 | 97.787 | 3.93 | 1.85478 | 24.8 | 0.612 | 24.9 |
| 24 | -51.703 | 1.73 | | | | 25.0 |
| 25 | -27.588 | 0.90 | 1.77250 | 49.6 | 0.552 | 24.9 |
| 26 | -57.933 | (variable) | | | | 25.9 |
| 27 | -32.827 | 0.90 | 1.72916 | 54.7 | 0.544 | 26.3 |
| 28 | 68.753 | 3.38 | 1.84666 | 23.8 | 0.619 | 28.7 |
| 29 | -860.263 | (variable) | | | | 29.2 |
| 30 | 0.000 | 1.40 | | | | 25.2 |
| 31 | -766.763 | 3.13 | 1.53775 | 74.7 | 0.539 | 25.9 |
| 32 | -62.011 | 0.15 | | | | 26.6 |
| 33 | 68.528 | 6.27 | 1.72047 | 34.7 | 0.583 | 27.5 |
| 34 | -32.822 | 1.20 | 1.49700 | 81.5 | 0.538 | 27.6 |
| 35 | 33.731 | 1.04 | | | | 26.6 |
| 36 | 48.810 | 7.68 | 1.72047 | 34.7 | 0.583 | 26.7 |
| 37 | -24.297 | 1.20 | 1.92286 | 18.9 | 0.650 | 26.4 |
| 38 | 4136.282 | 13.56 | | | | 26.7 |
| 39 | -839.194 | 6.57 | 1.92286 | 18.9 | 0.650 | 27.9 |
| 40 | -22.743 | 1.30 | 2.00330 | 28.3 | 0.598 | 28.1 |
| 41 | -854.680 | 13.41 | | | | 28.8 |
| 42 | 94.237 | 7.16 | 1.43875 | 94.7 | 0.534 | 33.4 |
| 43 | -40.116 | 0.15 | | 33.8 | | |
| 44 | -82.233 | 1.40 | 1.91650 | 31.6 | 0.591 | 33.6 |
| 45 | 52.623 | 9.84 | 1.43875 | 94.7 | 0.534 | 34.4 |
| 46 | -57.923 | 0.20 | | | | 36.2 |
| 47 | 144.422 | 5.40 | 1.43875 | 94.7 | 0.534 | 37.7 |
| 48 | -79.252 | 0.15 | | | | 37.9 |
| 49 | 68.431 | 4.80 | 1.43875 | 94.7 | 0.534 | 38.0 |
| 50 | -574.592 | 5.00 | | | | 37.7 |
| 51 | ∞ | 63.04 | 1.60859 | 46.4 | 0.566 | 50.0 |
| 52 | ∞ | 8.70 | 1.51633 | 64.2 | 0.535 | 50.0 |
| 53 | ∞ | 19.68 | | | | 50.0 |
| Image plane | ∞ | | | | | |

Aspheric surface data

1st surface

K=7.53864e+000

A4=-5.87280e-007

A6=-8.99936e-009

A8=-9.29496e-012

A10=2.45206e-015

A12=2.74033e-019

A5=1.05508e-007

A7=4.04917e-010

A9=4.51288e-014

A11=-4.90820e-017

7th surface

K=-1.16313e+001

A4=-1.66537e-007

A6=3.81667e-009

A8=2.93643e-012

A10=-2.28118e-016

A12=1.55311e-018

A14=1.56731e-021

A16=2.79763e-025

A5=-4.69873e-008

A7=-1.51723e-010

A9=-6.87089e-015

A11=-2.78312e-017

A13=-5.27462e-020

A15=-3.17098e-023

19th surface

K=1.92331e+001

A4=9.10600e-007

A6=-2.62031e-009

A8=2.29310e-009

A10=-1.07036e-011

A12=-1.74510e-014

A5=4.65541e-007

A7=-1.76045e-008

A9=-4.64027e-011

A11=8.05488e-013

Various data

| Zoom ratio | | 6.70 | | | |
|---|---|---|---|---|---|
| Focal length | 11.00 | 19.80 | 35.20 | 55.55 | 73.70 |
| F-number | 2.27 | 2.27 | 2.27 | 2.27 | 2.30 |
| Half angle of view (degree) | 40.06 | 25.04 | 14.72 | 9.45 | 7.15 |
| Image height | 9.25 | 9.25 | 9.25 | 9.25 | 9.25 |
| Total lens length | 361.55 | 361.55 | 361.55 | 361.55 | 361.55 |
| BF | 19.68 | 19.68 | 19.68 | 19.68 | 19.68 |
| d18 | 0.89 | 19.43 | 32.73 | 40.42 | 43.92 |
| d26 | 36.72 | 16.75 | 5.05 | 2.40 | 4.01 |
| d29 | 11.60 | 13.03 | 11.43 | 6.39 | 1.28 |
| Entrance pupil position | 52.50 | 68.19 | 89.37 | 110.96 | 125.43 |
| Exit pupil position | 701.34 | 701.34 | 701.34 | 701.34 | 701.34 |
| Front principal point position | 63.68 | 88.56 | 126.39 | 171.04 | 207.10 |
| Rear principal point position | 8.68 | -0.12 | -15.52 | -35.87 | -54.02 |

Zoom lens unit data

| Unit | Start surface | Focal length | Lens structure length | Front principal point position | Rear principal point position |
|---|---|---|---|---|---|
| 1 | 1 | 44.38 | 106.64 | 60.44 | 31.72 |
| 2 | 19 | -26.12 | 19.01 | 2.97 | -12.23 |
| 3 | 27 | -51.39 | 4.28 | -0.17 | -2.51 |
| 4 | 31 | 62.39 | 84.60 | 66.13 | -67.83 |

Individual lens data

| Lens | Start surface | Focal length |
|---|---|---|
| 1 | 1 | -75.06 |
| 2 | 3 | -113.50 |
| 3 | 5 | 147.75 |
| 4 | 7 | 157.14 |
| 5 | 9 | -125.62 |
| 6 | 10 | 149.99 |
| 7 | 12 | -140.45 |
| 8 | 13 | 117.31 |
| 9 | 15 | 234.80 |
| 10 | 17 | 87.17 |
| 11 | 19 | -34.90 |
| 12 | 21 | -53.27 |

(continued)

| Lens | Start surface | Focal length |
|---|---|---|
| 13 | 23 | 39.68 |
| 14 | 25 | -68.75 |
| 15 | 27 | -30.23 |
| 16 | 28 | 74.58 |
| 17 | 31 | 124.87 |
| 18 | 33 | 31.41 |
| 19 | 34 | -33.17 |
| 20 | 36 | 23.40 |
| 21 | 37 | -25.85 |
| 22 | 39 | 24.92 |
| 23 | 40 | -23.11 |
| 24 | 42 | 65.03 |
| 25 | 44 | -34.58 |
| 26 | 45 | 64.44 |
| 27 | 47 | 117.20 |
| 28 | 49 | 139.34 |
| 29 | 51 | 0.00 |
| 30 | 52 | 0.00 |

[Numerical embodiment 4]

[Unit mm]

Surface data

| Surface number | r | d | nd | vd |
|---|---|---|---|---|
| 1* | 148.689 | 2.80 | 1.80100 | 35.0 |
| 2 | 40.975 | 29.46 | | |
| 3 | -107.478 | 2.20 | 1.64000 | 60.1 |
| 4 | 356.045 | 0.20 | | |
| 5 | 116.351 | 8.20 | 1.95906 | 17.5 |
| 6 | 458.890 | 2.27 | | |
| 7* | 146.844 | 7.69 | 1.60311 | 60.6 |
| 8 | -230.654 | 10.00 | | |
| 9 | 436.411 | 2.00 | 1.84666 | 23.8 |
| 10 | 83.817 | 0.00 | 1.43875 | 94.7 |
| 11 | 83.817 | 9.19 | 1.43875 | 94.7 |
| 12 | 1287.588 | 0.20 | | |
| 13 | 159.095 | 2.00 | 1.80000 | 29.8 |
| 14 | 62.682 | 12.45 | 1.43875 | 94.7 |
| 15 | -157.140 | 0.25 | | |
| 16 | 248.094 | 5.20 | 1.59522 | 67.7 |
| 17 | -297.056 | 0.20 | | |
| 18 | 101.095 | 9.75 | 1.76385 | 48.5 |
| 19 | -159.427 | (variable) | | |
| 20* | 87.535 | 1.30 | 1.77250 | 49.6 |
| 21 | 22.170 | 9.45 | | |
| 22 | -35.651 | 0.90 | 1.69680 | 55.5 |

(continued)

| Surface number | r | d | nd | vd |
|---|---|---|---|---|
| 23 | 164.853 | 0.12 | | |
| 24 | 68.167 | 4.08 | 1.85478 | 24.8 |
| 25 | -71.935 | (variable) | | |
| 26 | -28.548 | 0.90 | 1.77250 | 49.6 |
| 27 | -45.188 | (variable) | | |
| 28 | -33.892 | 0.90 | 1.72916 | 54.7 |
| 29 | 54.974 | 2.56 | 1.84666 | 23.8 |
| 30 | 701.963 | (variable) | | |
| 31 (stop) | ∞ | 1.40 | | |
| 32 | -269.592 | 3.12 | 1.64000 | 60.1 |
| 33 | -53.675 | 0.15 | | |
| 34 | 73.372 | 5.60 | 1.72047 | 34.7 |
| 35 | -38.333 | 1.20 | 1.53775 | 74.7 |
| 36 | 37.055 | 1.07 | | |
| 37 | 46.967 | 7.10 | 1.72047 | 34.7 |
| 38 | -28.862 | 1.20 | 1.92286 | 18.9 |
| 39 | -319.564 | 15.48 | | |
| 40 | -189.528 | 5.80 | 1.92286 | 18.9 |
| 41 | -22.465 | 1.30 | 2.00330 | 28.3 |
| 42 | 452.499 | 9.94 | | |
| 43 | 89.344 | 7.48 | 1.43875 | 94.7 |
| 44 | -37.794 | 0.14 | | |
| 45 | -79.386 | 1.40 | 1.91650 | 31.6 |
| 46 | 52.768 | 7.85 | 1.43875 | 94.7 |
| 47 | -58.340 | 0.20 | | |
| 48 | 148.615 | 5.56 | 1.43875 | 94.7 |
| 49 | -75.217 | 0.15 | | |
| 50 | 60.559 | 5.65 | 1.48749 | 70.2 |
| 51 | -315.493 | 5.00 | | |
| 52 | ∞ | 63.04 | 1.60859 | 46.4 |
| 53 | ∞ | 8.70 | 1.51633 | 64.2 |
| 54 Image | ∞ | | | |
| plane | ∞ | | | |

Aspheric surface data

1 stsurface

$K=6.93423e+000$

$A4=-3.98582e-007$

$A6=-1.02005e-008$

$A8=-1.05821e-011$

$A10=2.75297e-015$

$A12=3.36917e-019$

$A5=1.19587e-007$

A7=4.58162e-010

A9=5.50879e-014

A11=-5.73971e-017

7th surface

K=-7.93349e+000
A4=-1.46483e-007
A6=4.06488e-009
A8=3.53554e-012
A10=-2.49402e-016
A12=1.55453e-018
A14=9.11403e-022
A16=1.52048e-025
A5=-4.98010e-008
A7=-1.66894e-010
A9=-1.62734e-014
A11=-2.80095e-017
A13=-4.21186e-020
A15=-1.61005e-023

20th surface

K=2.04249e+001
A4=-1.64923e-006
A6=-1.14035e-007
A8=-1.24632e-010
A10=-6.87145e-012
A12=-9.69214e-015
A5=5.67669e-007
A7=7.59481e-009
A9=3.06376e-011
A11=4.47794e-013

Various data

| Zoom ratio | 6.70 | | |
|---|---|---|---|
| | Wide angle | Middle | Telephoto |
| Focal length | 11.00 | 35.20 | 73.70 |
| F-number | 2.26 | 2.27 | 2.27 |
| Half angle of view (degree) | 40.06 | 14.72 | 7.15 |
| Image height | 9.25 | 9.25 | 9.25 |
| Total lens length | 355.99 | 355.99 | 355.99 |
| BF | 19.50 | 19.50 | 19.50 |
| d19 | 0.89 | 32.17 | 43.45 |
| d25 | 5.03 | 6.98 | 4.28 |
| d27 | 36.18 | 3.37 | 5.01 |
| d30 | 11.60 | 11.19 | 0.97 |
| d54 | 19.50 | 19.50 | 19.50 |

Zoom lens unit data

| Unit | Start surface | Focal length |
|---|---|---|
| 1 | 1 | 43.55 |
| 2 | 20 | -43.09 |
| 3 | 26 | -102.29 |
| 4 | 28 | -48.51 |
| 5 | 31 | 61.11 |

The correspondences between the embodiments and the above-mentioned conditional expressions are presented in table 1.

[Table 1]

| Conditional expression | | Lower limit | Upper limit | Embodiment | | | |
|---|---|---|---|---|---|---|---|
| | | | | 1 | 2 | 3 | 4 |
| (1) | d4a/d4 | 0 | 0.3 | 0.241 | 0.228 | 0.244 | 0.242 |
| (2) | vpa | 30 | 55 | 43.2 | 35.5 | 48 | 43.2 |
| (3) | vna | 37 | 60 | 46.8 | 46.8 | 50.2 | 46.8 |
| (4) | vpa - vna | -15 | 5 | -3.6 | -11.3 | -2.2 | -3.6 |
| (5) | $\theta$pa | 0.550 | 0.620 | 0.568 | 0.581 | 0.569 | 0.568 |
| (6) | vpb | 70 | 90 | 74.6 | 75.4 | 79.5 | 74.6 |
| (7) | vnb | 25 | 43 | 29.9 | 36.6 | 29.9 | 29.9 |
| (8) | vpb - vnb | 35 | 55 | 44.7 | 38.8 | 49.6 | 44.7 |
| (9) | $\theta$pb | 0.550 | 0.620 | 0.556 | 0.553 | 0.557 | 0.556 |
| (12) | f4a/f4 | 0.7 | 1.2 | 0.85 | 0.99 | 0.89 | 0.77 |
| (13) | f4b/f4 | 0.7 | 1.4 | 0.91 | 0.88 | 0.94 | 0.98 |
| (14) | h/fw | -10 | -3 | -6.44 | -5.97 | -6.17 | -6.11 |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A zoom lens comprising in order from an object side to an image side: a first lens unit having a positive refractive power and configured not to be moved for zooming; a second lens unit having a negative refractive power and configured to be moved for zooming; one or two zooming lens units configured to be moved for zooming; and a rear lens unit having a positive refractive power and configured not to be moved for zooming, wherein
an interval between each pair of adjacent lens units is changed for zooming, the rear lens unit includes

a front sub lens unit consisting of a lens whose image-side surface is disposed within a range satisfying a conditional expression

$$0 < d4a/d4 < 0.3,$$

where d4 is a thickness of the rear lens unit, and d4a is a distance from a vertex, of vertices of lenses included in the rear lens unit, closest to the object side, and
a rear sub lens unit other than the front sub lens unit, and conditional expressions

$$30 < vpa < 55,$$

$$37 < vna < 60,$$

$$-15 < (vpa - vna) < 5,$$

and

$$0.550 < \theta pa < 0.620,$$

are satisfied where vpa is an average Abbe number of convex lenses included in the front sub lens unit, θpa is an average partial dispersion ratio of the convex lenses, and vna is an average Abbe number of concave lenses included in the front sub lens unit, and an Abbe number v and a partial dispersion ratio θ are respectively represented by expressions

$$v = (Nd - 1)/(NF - NC),$$

$$\theta = (Ng - NF)/(NF - NC),$$

where Ng, NF, Nd, and NC are refractive indexes with Fraunhofer g-line, F-line, d-line, and C-line, respectively.

2. The zoom lens according to claim 1, wherein conditional expressions

$$70 < vpb < 90,$$

$$25 < vnb < 43,$$

$$35 < (vpb - vnb) < 55,$$

and

$$0.550 < \theta pb < 0.620$$

are satisfied where vpb is an average Abbe number of convex lenses included in the rear sub lens unit, θpb is an average partial dispersion ratio of the convex lenses, and vnb is an average Abbe number of concave lenses included in the rear sub lens unit.

3. The zoom lens according to claim 1 or 2, wherein conditional expressions

$$0.7 < f4a/f4 < 1.2,$$

$$0.7 < f4b/f4 < 1.4,$$

and

$$-10 < h/fw < -3$$

are satisfied where fw is a focal length of the zoom lens at a wide angle end, f4 is a focal length of the rear lens unit, h is a rear principal point position of the rear lens unit, f4a is a focal length of the front sub lens unit, and f4b is a focal length of the rear sub lens unit.

4. A zoom lens comprising in order from an object side to an image side: a first lens unit having a positive refractive power and configured not to be moved for zooming; a second lens unit having a negative refractive power and configured to be moved for zooming; one or two zooming lens units configured to be moved for zooming; and a rear lens unit having a positive refractive power and configured not to be moved for zooming, wherein an interval between each pair of adjacent lens units is changed for zooming, the rear lens unit includes

   a front sub lens unit consisting of a lens whose image-side surface is disposed within a range satisfying a conditional expression

$$0 < d4a/d4 < 0.3,$$

   where d4 is a thickness of the rear lens unit, and d4a is a distance from a vertex, of vertices of lenses included in the rear lens unit, closest to the object side, and
   a rear sub lens unit other than the front sub lens unit, and conditional expressions

$$70 < \nu pb < 90,$$

$$25 < \nu nb < 43,$$

$$35 < (\nu pb - \nu nb) < 55,$$

   and

$$0.550 < \theta pb < 0.620$$

   are satisfied where $\nu$pb is an average Abbe number of convex lenses included in the rear sub lens unit, $\theta$pb is an average partial dispersion ratio of the convex lenses, and $\nu$nb is an average Abbe number of concave lenses included in the rear sub lens unit, and an Abbe number $\nu$ and a partial dispersion ratio $\theta$ are respectively represented by expressions

$$\nu = (Nd - 1)/(NF - NC),$$

   and

$$\theta = (Ng - NF)/(NF - NC),$$

   where Ng, NF, Nd, and NC are refractive indexes with Fraunhofer g-line, F-line, d-line, and C-line, respectively.

5. The zoom lens according to any one of claims 1 to 4, wherein conditional expressions

$$0.7 < f4a/f4 < 1.2,$$

$$0.7 < f4b/f4 < 1.4,$$

and

$$-10 < h/fw < -3$$

are satisfied where fw is a focal length of the zoom lens at a wide angle end, f4 is a focal length of the rear lens unit, h is a rear principal point position of the rear lens unit, f4a is a focal length of the front sub lens unit, and f4b is a focal length of the rear sub lens unit.

6. An image pickup apparatus comprising:

the zoom lens according to any one of claims 1 to 5; and
an image pickup element disposed at an image plane of the zoom lens.

# FIG. 1

## FIG. 2A

Fno= 2.27
ω = 40.1°
ω = 40.1°
ω = 40.1°

——— e-LINE ——— ΔS
——— g-LINE ——— ΔM

-0.200    0.200    -0.200    0.200    -5.000    5.000    -0.050    0.050

SPHERICAL ABERRATION    ASTIGMATISM    DISTORTION (%)    CHROMATIC ABERRATION OF MAGNIFICATION

## FIG. 2B

Fno= 2.3
ω = 7.15°
ω = 7.15°
ω = 7.15°

——— e-LINE ——— ΔS
——— g-LINE ——— ΔM

-0.200    0.200    -0.200    0.200    -5.000    5.000    -0.050    0.050

SPHERICAL ABERRATION    ASTIGMATISM    DISTORTION (%)    CHROMATIC ABERRATION OF MAGNIFICATION

# FIG. 3

## FIG. 4A

e-LINE ——— ΔS
g-LINE – – – ΔM

Fno= 2.27          ω = 40.1°          ω = 40.1°          ω = 40.1°

-0.200        0.200 -0.200        0.200 -5.000        5.000 -0.050        0.050
SPHERICAL            ASTIGMATISM        DISTORTION (%)    CHROMATIC ABERRATION
ABERRATION                                                 OF MAGNIFICATION

## FIG. 4B

e-LINE ——— ΔS
g-LINE – – – ΔM

Fno= 2.33          ω = 7.15°          ω = 7.15°          ω = 7.15°

-0.200        0.200 -0.200        0.200 -5.000        5.000 -0.050        0.050
SPHERICAL            ASTIGMATISM        DISTORTION (%)    CHROMATIC ABERRATION
ABERRATION                                                 OF MAGNIFICATION

# FIG. 5

# FIG. 6A

e-LINE ——— ΔS
g-LINE ——— ΔM

Fno= 2.27     ω = 40.1°     ω = 40.1°     ω = 40.1°

-0.200    0.200  -0.200    0.200  -5.000    5.000  -0.050    0.050
SPHERICAL      ASTIGMATISM     DISTORTION (%)   CHROMATIC ABERRATION
ABERRATION                                               OF MAGNIFICATION

# FIG. 6B

e-LINE ——— ΔS
g-LINE ——— ΔM

Fno= 2.3     ω = 7.15°     ω = 7.15°     ω = 7.15°

-0.200    0.200  -0.200    0.200  -5.000    5.000  -0.050    0.050
SPHERICAL      ASTIGMATISM     DISTORTION (%)   CHROMATIC ABERRATION
ABERRATION                                               OF MAGNIFICATION

# FIG. 7

SP

U5A

U5B

DG

IP

U2 U3

U4

U5

U1

# FIG. 8A

Fno= 2.26   ω = 42°   ω = 42°   ω = 42°

e-LINE ──── ΔS
g-LINE ──── ΔM

-0.200   0.200   -0.200   0.200   -5.000   5.000   -0.050   0.050

SPHERICAL ABERRATION   ASTIGMATISM   DISTORTION (%)   CHROMATIC ABERRATION OF MAGNIFICATION

# FIG. 8B

Fno= 2.27   ω = 7.01°   ω = 7.01°   ω = 7.01°

e-LINE ──── ΔS
g-LINE ──── ΔM

-0.200   0.200   -0.200   0.200   -5.000   5.000   -0.050   0.050

SPHERICAL ABERRATION   ASTIGMATISM   DISTORTION (%)   CHROMATIC ABERRATION OF MAGNIFICATION

# FIG. 9

LP

1    2

g-LINE

C,F-LINE

Δ (+)

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010217735 A